# EUROPEAN PATENT APPLICATION

(11) **EP 4 631 605 A1**
(43) Date of publication of application: **15.10.2025**
(21) Application number: 23900682.8
(22) Date of filing: 06.12.2023
(51) Int. Cl.: B01D 61/22, B01D 65/02, G05B 13/02

(54) **SYSTEM FOR CONTROLLING AMOUNT OF MEMBRANE-CLEANING WIND, METHOD FOR CONTROLLING AMOUNT OF MEMBRANE-CLEANING WIND, AND PROGRAM FOR CONTROLLING AMOUNT OF MEMBRANE-CLEANING WIND**

(30) Priority: 09.12.2022 JP 2022196992
(71) Applicant: Kubota Corporation, Osaka 556-8601 (JP)
(72) Inventor: KOBAYASHI, Hiroyuki, Amagasaki-shi, Hyogo 661-8567 (JP); MATSUZAKI, Tomoko, Amagasaki-shi, Hyogo 661-8567 (JP)
(74) Representative: Mewburn Ellis LLP
(86) International application number: PCT/JP2023/043612
(87) International publication number: WO 2024/122570

(57) **Abstract**

To provide a membrane scouring airflow control system, a membrane scouring airflow control method and a membrane scouring airflow control program that can stabilize the membrane filtration operation and improve energy conservation. A membrane scouring airflow control system 100 includes: an operation data acquiring apparatus 4 that acquires operation data measured during membrane filtration operation performed by a membrane separating apparatus 90; an input data calculating apparatus 5 that derives input data from the operation data; a learning model generating apparatus 1 that generates a learning model by using machine learning; a storage apparatus 3 that stores the learning model; an inference apparatus 2 that infers a state of a separation membrane 93, based on the input data by using the learning model; an input data determining apparatus 6 that determines the input data; and an air diffusion amount controlling apparatus 8 that executes first control of an air diffusing apparatus 95 so that air diffusion is performed at a first level, and executes at the same time second control of the air diffusing apparatus 95 so that the air diffusion is performed at the second level at a time when the input data determined by the input data determining apparatus 6 becomes a threshold or more or a threshold or less.

## Description

### [Technical Field]

The present invention relates to a membrane scouring airflow control system, a membrane scouring airflow control method, and a membrane scouring airflow control program, for controlling an air diffusion amount supplied from an air diffusing apparatus disposed in a membrane separating apparatus to a separation membrane.

### [Background Art]

A membrane separation activated sludge system performs air diffusion or aeration from an air diffusing apparatus disposed below a separation membrane to clean the separation membrane, so that the stability of the membrane filtration operation in a membrane separating apparatus is maintained. PTL 1 discloses a technique to implement life cycle cost reduction and energy conservation by controlling an air diffusion amount (that is, membrane scouring airflow) to an optimum range by using a learning function, while maximizing the performance of a separation membrane. The system disclosed in PTL 1 performs machine learning in each cycle of the membrane filtration operation, so that the air diffusion amount of the air diffusing apparatus is controlled. The membrane filtration operation cycle disclosed in PTL 1 includes an operation period of executing the membrane filtration operation (e.g. about 5 minutes), and a pause period of not executing the membrane filtration operation (e.g. about 1 minute).

In the membrane separation activated sludge method system, the membrane filtration flow rate or Flux may have to be increased in a case where inflow of water to be treated increases or where capacity of water to be treated in a storage tank increases. The system disclosed in PTL 1, however, performs inference (inference) using a machine learning model for each cycle of the membrane filtration operation so as to control the air diffusion amount. This means that the air diffusion amount can be closely controlled based on input data such as trans-membrane pressure, but if a condition of the membrane filtration operation suddenly changes, e.g., a case where the membrane filtration flow rate suddenly increases, a quick response to the sudden change of the operating condition may not be possible, which may cause a delay in the control of the air diffusion amount. If there is a delay in controlling the air diffusion amount, and, at this time the membrane filtration flow rate suddenly increases, the air diffusion amount may become insufficient in certain time blocks, whereby inter-membrane clogging may progress. On the other hand, in a case where the membrane filtration flow rate suddenly decreases, the air diffusion amount may become excessive in certain time blocks, whereby implementing energy saving may become difficult. In this respect, the technique disclosed in PTL 1 has room for improvement.

### [Citation List]

### [Patent Literature]

[PTL 1] Japanese Patent Application Publication No. 2021-186761

### [Summary of Invention]

### [Technical Problem]

With the foregoing in view, it is an object of the present invention to provide a membrane scouring airflow control system, a membrane scouring airflow control method, and a membrane scouring airflow control program that can stabilize the membrane filtration operation and improve energy conservation.

### [Solution to Problem]

A first aspect of the present invention is a membrane scouring airflow control system that controls an air diffusion amount which is supplied from an air diffusing apparatus disposed in a membrane separating apparatus to a separation membrane, the system including: an operation data acquiring apparatus that acquires operation data measured during membrane filtration operation performed by the membrane separating apparatus; an input data calculating apparatus that derives input data from the operation data received from the operation data acquiring apparatus; a learning model generating apparatus that generates a learning model to infer a state of the separation membrane by using machine learning, an input to which is the input data received from the input data calculating apparatus; a storage apparatus that stores the learning model generated by the learning model generating apparatus; an inference apparatus that infers a state of the separation membrane, based on the input data received from the input data calculating apparatus, by using the learning model stored in the storage apparatus; an input data determining apparatus that determines the input data received from the input data calculating apparatus; and an air diffusion amount controlling apparatus that executes first control of the air diffusing apparatus so that a first level of the air diffusion amount is determined in accordance with the state of the separation membrane inferred by the inference apparatus and air diffusion is performed at the first level, and executes at the same time second control of the air diffusing apparatus so that a second level of the air diffusion amount is determined in accordance with the input data at a time when the input data determined by the input data determining apparatus becomes a first threshold or more or a second threshold or less and so that air diffusion is performed at the second level.

According to the first aspect of the present invention, the learning model generating apparatus generates a learning model to infer the state of the separation membrane based on the operation data measured during the membrane filtration operation performed by the membrane separating apparatus. Once the inference apparatus can infer the state of the separation membrane, the air diffusion amount controlling apparatus can execute the first control of the air diffusing apparatus, so that air is diffused at the first level of the air diffusion amount determined in accordance with the state of the separation membrane, hence stable membrane filtration operation can be performed while maintaining the state where the separation membrane is normal (e.g. state where the probability of a sudden rise of the trans-membrane pressure is low). Further, when the input data becomes the first threshold or more or the second threshold or less, the air diffusion amount controlling apparatus executes the second control of the air diffusing apparatus, so that the air is diffused at the second level of the air diffusion amount determined in accordance with the input data. Therefore even if the condition of the membrane filtration operation suddenly changes, the air diffusion amount controlling apparatus executes interrupt processing, which is different from the processing of the machine learning, so that the sudden change of the condition of the membrane filtration operation can be quickly handled, and generation of delay in the control of the air diffusion amount can be minimized. As a result, generation of the time block where the air diffusion amount becomes insufficient, or generation of the time block where the air diffusion amount becomes excessive can be minimized during the membrane filtration operation. Thereby the first aspect of the present invention can improve the stability of the membrane filtration operation and energy conservation.

A second aspect of the present invention is the membrane scouring airflow control system according to the first aspect of the present invention. The membrane filtration operation is an intermittent operation, in which a cycle including an operation period of executing the membrane filtration operation and a pause period following the operation period is repeated, the first control is executed in each of the pause periods, and the second control is executed in the operation period.

According to the second aspect, the air diffusion amount controlling apparatus executes interrupt processing which is different from the processing of the machine learning, even in a case where the condition suddenly changes during the operation period of the membrane filtration operation. Thereby the sudden change of the condition during the operation period of the membrane filtration operation can be quickly handled, and generation of a delay in control of the air diffusion amount can be minimized.

A third aspect of the present invention is the membrane scouring airflow control system according to the first or second aspect of the present invention. The operation data includes a membrane filtration flow rate measured during the membrane filtration operation, the input data derived from the membrane filtration flow rate by the input data calculating apparatus includes a change speed of the membrane filtration flow rate during the membrane filtration operation, and the input data determining apparatus determines the change speed.

According to the third aspect, when the change speed of the membrane filtration flow rate becomes the first threshold or more, or the second threshold or less, the air diffusion amount controlling apparatus executes the second control of the air diffusing apparatus, so that the air is diffused at a second level of the air diffusion amount determined in accordance with the change speed of the membrane filtration flow rate. Therefore even if the membrane filtration flow rate suddenly increases or suddenly decreases, the air diffusion amount controlling apparatus executes interrupt processing, which is different from the processing of the machine learning, so that the sudden change of the membrane filtration flow rate can be quickly handled, and generation of delay in controlling of the air diffusion amount can be minimized.

A fourth aspect of the present invention is the membrane scouring airflow control system according to the third aspect of the present invention. In a case where the change speed, which is positive, becomes the first threshold or more, the air diffusion amount controlling apparatus determines the second level which is higher than the first level, and in a case where the change speed, which is negative, becomes the second threshold or less, the air diffusion amount controlling apparatus determines the second level which is lower than the first level.

According to the fourth aspect, when the positive change speed of the membrane filtration flow rate becomes the first threshold or more, the air diffusion amount controlling apparatus determines the level of the air diffusion amount of the air diffusing apparatus to the second level, which is higher than the first level. When the negative change speed of the membrane filtration flow rate becomes the second threshold or less, the air diffusion amount controlling apparatus determines the level of the air diffusion amount of the air diffusing apparatus to the second level which is lower than the first level. Then the air diffusion amount controlling apparatus executes the second control of the air diffusing apparatus, so that air is diffused at the second level of the air diffusion amount. Therefore even if the membrane filtration flow rate suddenly increases, the air diffusion amount controlling apparatus executes interrupt processing which is different from the processing of the machine learning, so that generation of the time block where the air diffusion amount becomes insufficient can be minimized, and progress of inter-membrane clogging can be suppressed. Further, even if the membrane filtration flow rate suddenly decreases, the air diffusion amount controlling apparatus executes interrupt processing which is different from the processing of the machine learning, so that generation of the time block where the air diffusion amount becomes excessive can be minimized. Thereby stability of the membrane filtration operation and energy conservation can be improved with further certainty.

A fifth aspect of the present invention is the membrane scouring airflow control system according to any one of the first to fourth aspects of the present invention. The learning model generating apparatus acquires data inputted to the learning model in a case where the inference apparatus has inferred the state of the separation membrane, and updates the learning model by machine learning, the input of which is the acquired data.

According to the fifth aspect, the learning model generating apparatus updates the learning model by machine learning using the data which was inputted to the learning model when the inference apparatus inferred the state of the separation membrane, hence the inference accuracy of the learning model can be improved each time the inference apparatus performs inference.

A sixth aspect of the present invention is a membrane scouring airflow control method for controlling an air diffusion amount which is supplied from an air diffusing apparatus disposed in a membrane separating apparatus to a separation membrane. The method includes: a first step of acquiring operation data measured during membrane filtration operation performed by the membrane separating apparatus; a second step of deriving input data from the operation data acquired in the first step; a third step of generating a learning model to infer a state of the separation membrane by using machine learning, an input to which is the input data derived in the second step; a fourth step of storing the learning model generated in the third step; a fifth step of inferring the state of the separation membrane, based on the input data derived in the second step, by using the learning model stored in the fourth step; a sixth step of determining the input data derived in the second step; and a seventh step of executing first control of the air diffusing apparatus so that a first level of the air diffusion amount is determined in accordance with the state of the separation membrane inferred in the fifth step and so that air diffusion is performed at the first level, and executing, at the same time, second control of the air diffusing apparatus so that a second level of the air diffusion amount is determined in accordance with the input data at a time when the input data determined in the sixth step becomes a first threshold or more or a second threshold or less and so that air diffusion is performed at the second level.

According to the sixth aspect of the present invention, the learning model to infer the state of the separation membrane is generated based on the operation data measured during the membrane filtration operation performed by the membrane separating apparatus in the third step. Once the state of the separation membrane is inferred, the first control of the air diffusing apparatus can be executed in the seventh step, so that air is diffused at the first level of the air diffusion amount determined in accordance with the state of the separation membrane, hence a stable membrane filtration operation can be performed while maintaining the state where the separation membrane is normal (e.g. state where the probability of sudden rise of the trans-membrane pressure is low). Further, in the seventh step, when the input data becomes the first threshold or more, or the second threshold or less, the second control of the air diffusing apparatus is executed so that the air is diffused at the second level of the air diffusion amount determined in accordance with the input data. Therefore even if the condition of the membrane filtration operation suddenly changes, interrupt processing, which is different from the processing of the machine learning, is executed in the seventh step, so that the sudden change of the condition of the membrane filtration operation can be quickly handled, and generation of delay in the control of the air diffusion amount can be minimized. As a result, generation of the time block where the air diffusion amount becomes insufficient, or generation of the time block where the air diffusion amount becomes excessive can be minimized during the membrane filtration operation. Thereby the sixth aspect of the present invention can improve the stability of the membrane filtration operation and energy conservation.

A seventh aspect of the present invention is a membrane scouring airflow control program executed by a computer of a membrane scouring airflow control system that controls an air diffusion amount which is supplied from an air diffusing apparatus disposed in a membrane separating apparatus to a separation membrane. This program causes the computer to execute: a first step of acquiring operation data which is measured during membrane filtration operation performed by the membrane separating apparatus; a second step of deriving input data from the operation data acquired in the first step; a third step of generating a learning model to infer a state of the separation membrane by using machine learning, an input to which is the input data derived in the second step; a fourth step of storing the learning model generated in the third step; a fifth step of inferring the state of the separation membrane, based on the input data derived in the second step, by using the learning model stored in the fourth step; a sixth step of determining the input data derived in the second step; and a seventh step of executing first control of the air diffusing apparatus so that a first level of the air diffusion amount is determined in accordance with the state of the separation membrane inferred in the fifth step and so that air diffusion is performed at the first level, and executing, at the same time, second control of the air diffusing apparatus so that a second level of the air diffusion amount is determined in accordance with the input data at a time when the input data determined in the sixth step becomes a first threshold or more or a second threshold or less and so that air diffusion is performed at the second level.

According to the seventh aspect of the present invention, the learning model to infer the state of the separation membrane is generated based on the operation data measured during the membrane filtration operation performed by the membrane separating apparatus in the third step. Once the state of the separation membrane is inferred, the first control of the air diffusing apparatus can be executed in the seventh step, so that air is diffused at the first level of the air diffusion amount determined in accordance with the state of the separation membrane, hence a stable membrane filtration operation can be performed while maintaining the state where the separation membrane is normal (e.g. state where the probability of sudden rise of the trans-membrane pressure is low). Further, in the seventh step, when the input data becomes the first threshold or more or the second threshold or less, the second control of the air diffusing apparatus is executed, so that the air is diffused at the second level of the air diffusion amount determined in accordance with the input data. Therefore even if the condition of the membrane filtration operation suddenly changes, interrupt processing, which is different from the processing of the machine learning, is executed in the seventh step, so that the sudden change of the condition of the membrane filtration operation can be quickly handled, and generation of delay in the control of the air diffusion amount can be minimized. As a result, generation of the time block where the air diffusion amount becomes insufficient, or generation of the time block where the air diffusion amount becomes excessive can be minimized during the membrane filtration operation. Thereby the seventh aspect of the present invention can improve the stability of the membrane filtration operation and energy conservation.

### [Advantageous Effects of Invention]

According to the present invention, a membrane scouring airflow control system, a membrane scouring airflow control method, and a membrane scouring airflow control program that can stabilize the membrane filtration operation and improve energy conservation can be provided.

### [Brief Description of Drawings]

[Fig. 1]

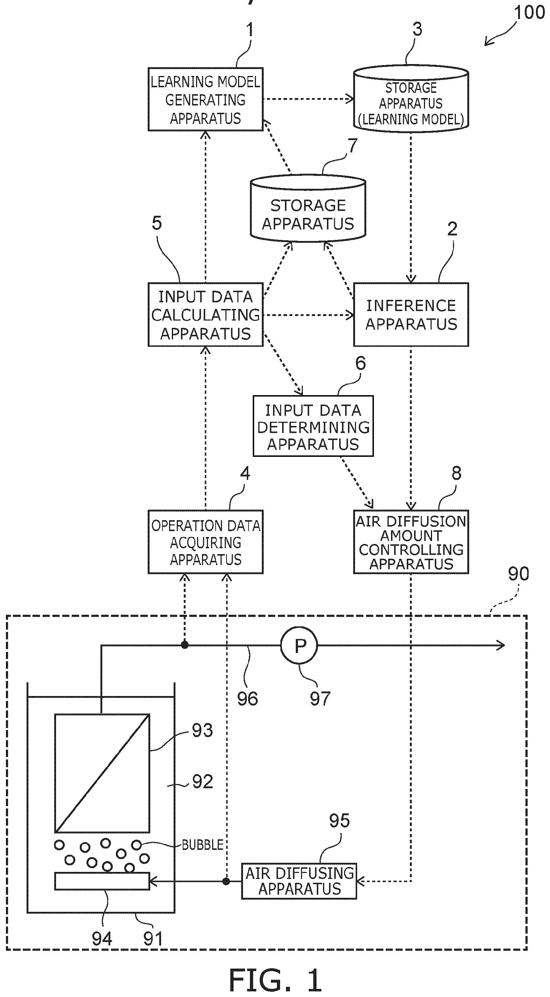

   Fig. 1 is a block diagram depicting an overview of the membrane scouring airflow control system according to a present embodiment.
[Fig. 2]

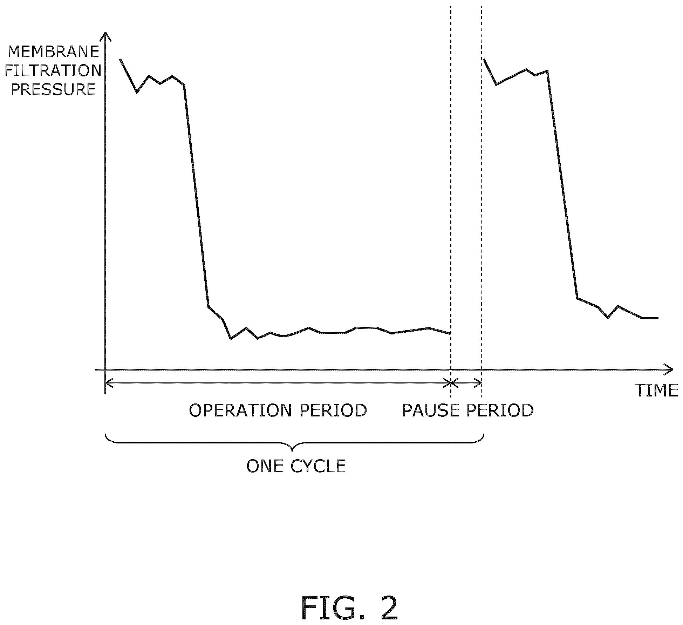

   Fig. 2 is a graph depicting a time-dependent change of a membrane filtration pressure that is measured during the membrane filtration operation executed by the membrane separating apparatus.
[Fig. 3]

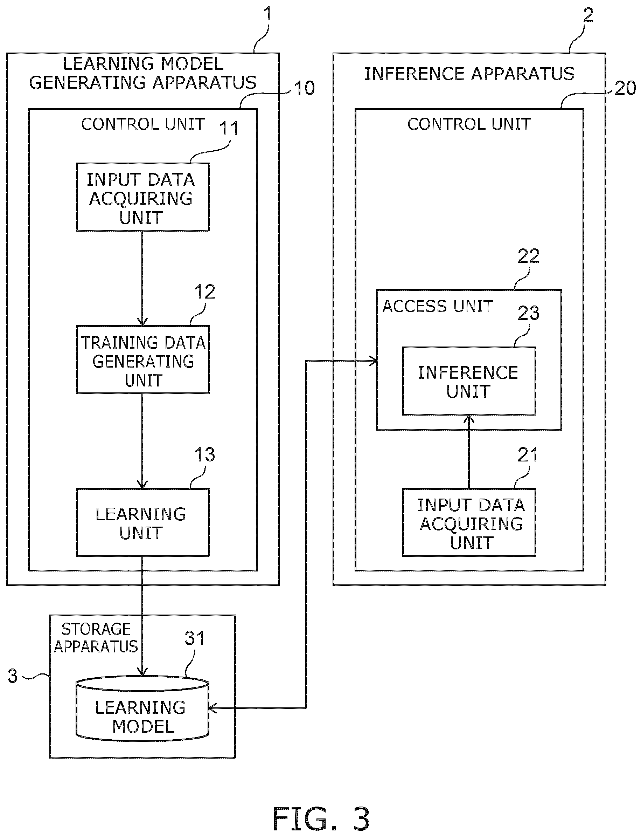

   Fig. 3 is a block diagram depicting an example of a major configuration of the learning model generating apparatus and the inference apparatus.
[Fig. 4]

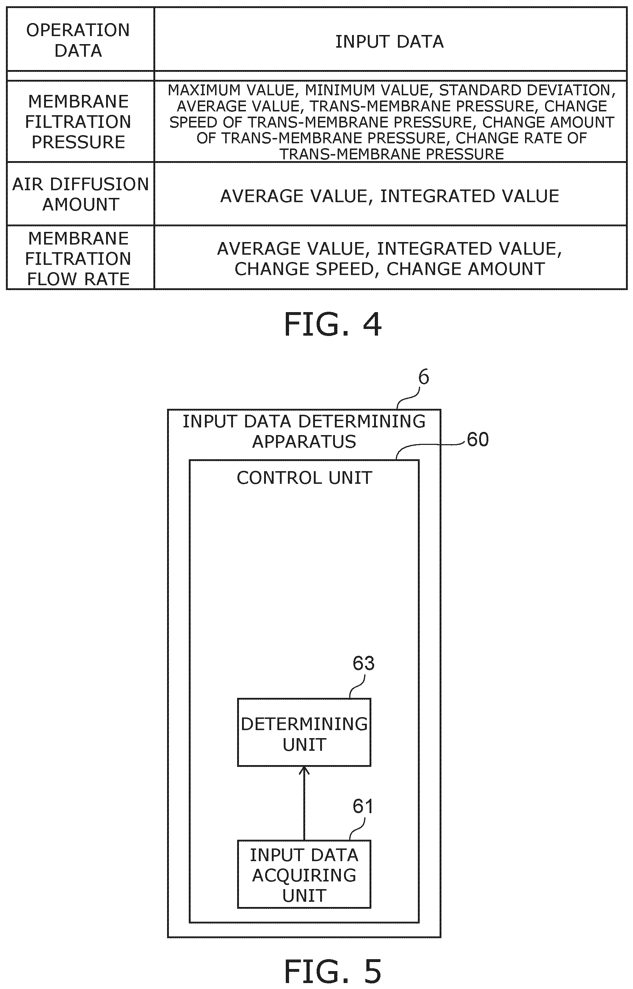

   Fig. 4 is a table indicating a specific example of input data derived from the operation data.
[Fig. 5]
   Fig. 5 is a block diagram depicting an example of a major configuration of the input data determining apparatus.
[Fig. 6]

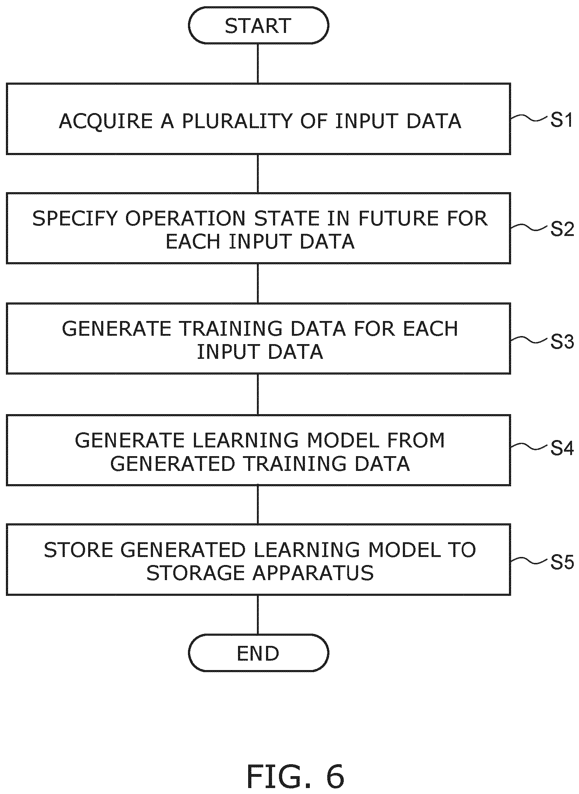

   Fig. 6 is a flow chart depicting an example of a flow of learning model generating processing executed by the learning model generating apparatus.
[Fig. 7]

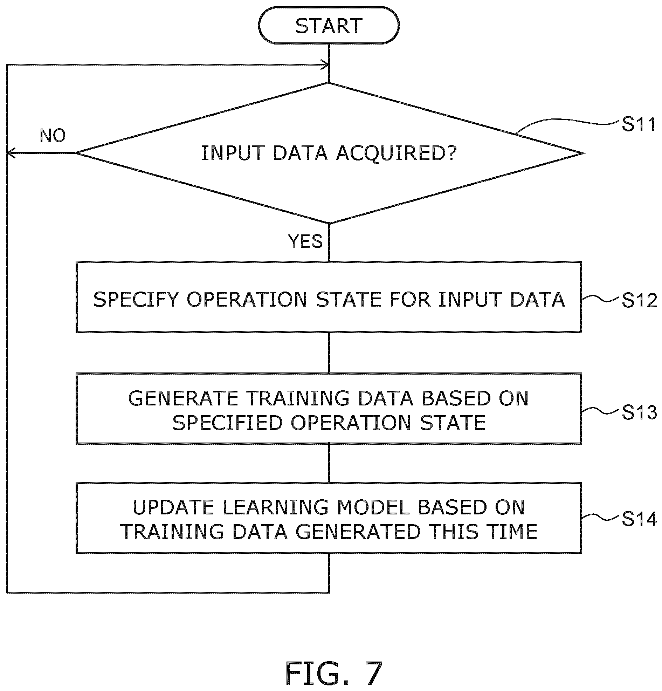

   Fig. 7 is a flow chart depicting an example of a flow of learning model updating processing executed by the learning model generating apparatus.
[Fig. 8]

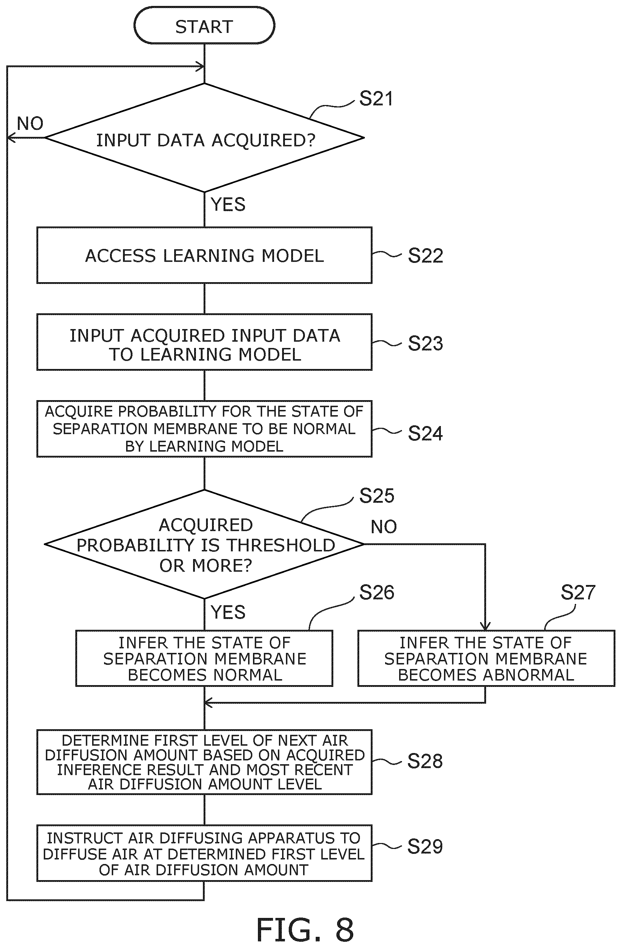

   Fig. 8 is a flow chart depicting an example of a flow of inference processing executed by the inference apparatus, and air diffusion amount controlling processing executed by the air diffusion amount controlling apparatus.
[Fig. 9]

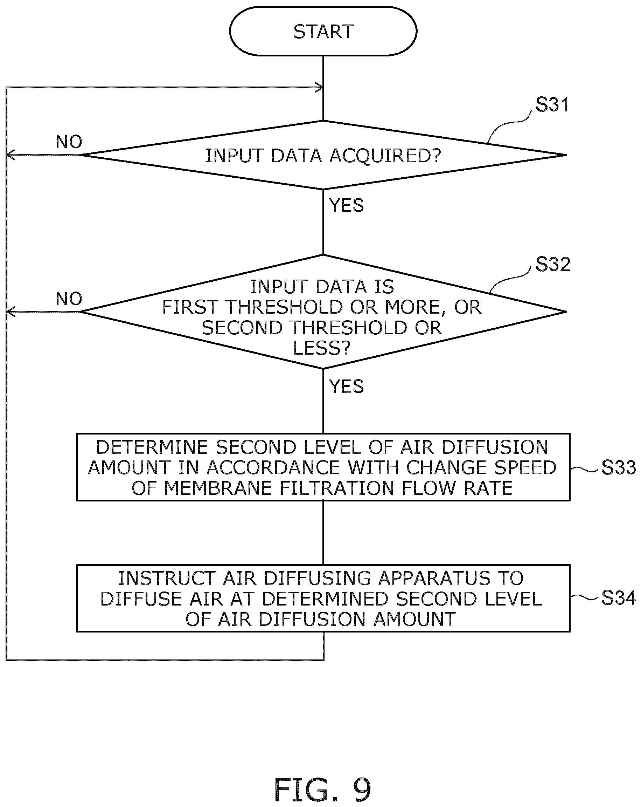

   Fig. 9 is a flow chart depicting an example of a flow of input data determining processing executed by the input data determining apparatus, and air diffusion amount controlling processing executed by the air diffusion amount controlling apparatus.
[Fig. 10]

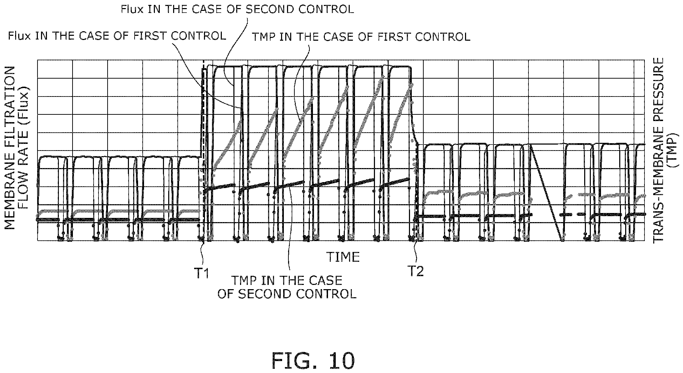

   Fig. 10 is a graph depicting an example of a relationship of the membrane filtration flow rate, the trans-membrane pressure, and time.
[Fig. 11]

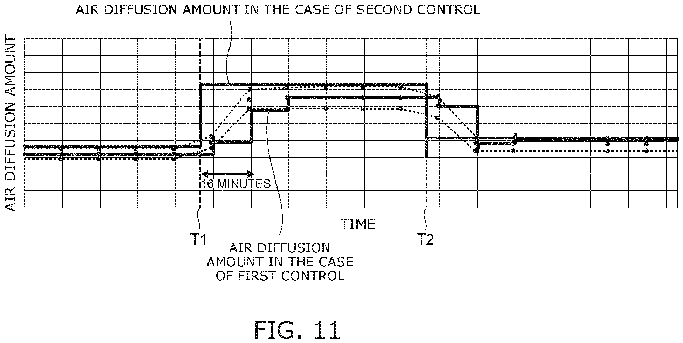

   Fig. 11 is a graph depicting an example of a relationship of the air diffusion amount and time.
[Fig. 12]

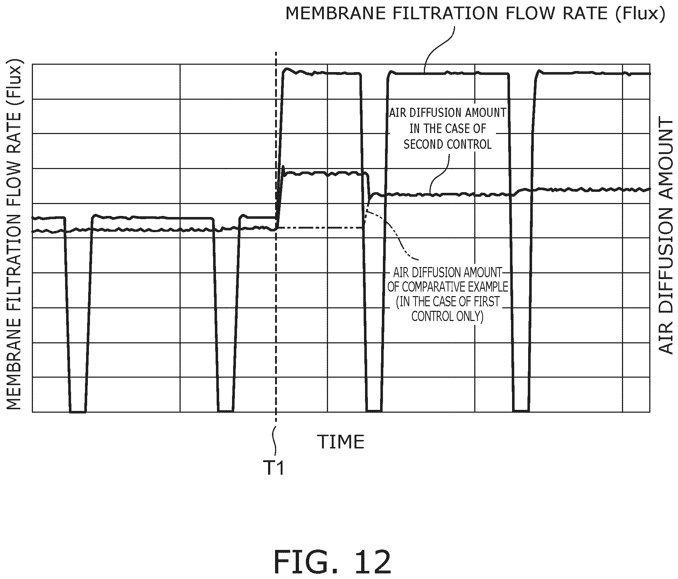

   Fig. 12 is a graph depicting an example of a relationship of the membrane filtration flow rate, air diffusion amount, and time.

### [Description of Embodiments]

Embodiments of the present invention will now be described with reference to the drawings.

The embodiments to be described below are preferred examples of the present invention, where various technically preferable limitations are attached, however unless otherwise specified, the scope of the present invention is not limited to these aspects in the following description. In each drawing, same composing elements are denoted with a same reference sign, for which detailed description is omitted, unless necessary.

### <Overview of membrane scouring airflow control system>

Fig. 1 is a block diagram depicting an overview of a membrane scouring airflow control system according to the present embodiment.

A membrane scouring airflow control system 100 is a system that infers a state of a separation membrane 93, which is used for membrane filtration operation using a learning model generated by machine learning, and controls an air diffusion amount (that is, membrane scouring airflow) that is supplied to the separation membrane 93 in accordance with the inference result. "State" of the separation membrane 93 means the state indicating the degree of contamination of the separation membrane 93. A normal state is where the contamination degree is low, and a sudden rise of the trans-membrane pressure (TMP) is hardly generated at that time. This control is an example of "first control" of the present invention. In the following description, a control that is executed using a learning model generated by machine learning may be called "first control".

Further, the membrane scouring airflow control system 100 is a system that controls the air diffusion amount (that is, membrane scouring airflow) to be supplied to the separation membrane 93 in accordance with input data when the input data becomes a first threshold or more or a second threshold or less. This control is an example of "second control" of the present invention. In the following description, a control that is executed as interrupt processing, which is different from the first control when the input data becomes a first threshold or more or a second threshold or less, may be called "second control".

The membrane scouring airflow control system 100 includes: a learning model generating apparatus 1, an inference apparatus 2, a storage apparatus 3, an operation data acquiring apparatus 4, an input data calculating apparatus 5, an input data determining apparatus 6, an air diffusion amount controlling apparatus 8, and a membrane separating apparatus 90. The membrane scouring airflow control system 100 may include a storage apparatus 7.

The installation method and the location of the learning model generating apparatus 1, the inference apparatus 2, a storage apparatus 3, the operation data acquiring apparatus 4, the input data calculating apparatus 5, the input data determining apparatus 6, and the storage apparatus 7 are not especially limited. A preferred example is that the operation data acquiring apparatus 4 and the air diffusion amount controlling apparatus 8 are installed as programmable logic controllers (PLCs). The inference apparatus 2, the input data calculating apparatus 5, the input data determining apparatus 6 and the storage apparatus 7 are implemented by edge computing. The learning model generating apparatus 1 and the storage apparatus 3 are implemented by cloud computing. This installation method for the learning model generating apparatus 1, the inference apparatus 2, the storage apparatus 3, the input data calculating apparatus 5, the input data determining apparatus 6 and the storage apparatus 7 is one example, and the present invention is not limited to this.

### (Membrane separating apparatus 90)

The membrane separating apparatus 90 is an apparatus that performs the membrane filtration operation, where water to be treated 92 is filtered using the separation membrane 93, and the treated water that passed through the separation membrane 93 is acquired. The treated water can be regarded as treated water after impurities are removed by filtration.

The membrane separating apparatus 90 includes a membrane separation tank 91, the separation membrane 93, an air diffusion pipe 94, an air diffusing apparatus 95, a filtered water pipe 96, and a filtration pump 97. The membrane separation tank 91 stores the water to be treated 92. The separation membrane 93 is disposed in a state of being dipped in the water to be treated 92, so as to filter the water to be treated 92. The filtered water pipe 96 is connected to the membrane separation tank 91 via the separation membrane 93, and allows the treated water, generated by filtering the water to be treated 92 through the separation membrane 93, to flow through. The filtration pump 97 is connected to the separation membrane 93 via the filtered water pipe 96, and allows the treated water to flow out. The air diffusing apparatus 95 supplies air to remove impurities adhering to the separation membrane 93. In other words, the air diffusing apparatus 95 performs air diffusion on the membrane surface of the separation membrane 93. The air diffusion pipe 94 is disposed directly below the separation membrane 93, and supplies bubbles from the bottom to the top of the separation membrane 93 using the air supplied from the air diffusing apparatus 95.

The membrane separation tank 91 is a tank that can receive and store the water to be treated 92, which flows into the membrane separation tank 91, and may be formed of such material as concrete, stainless steel and resin, which does not cause leakage. The structure of the membrane separation tank 91 may be any structure which does not cause leakage.

The separation membrane 93 may be any membrane that can separate solids from liquid, such as a hollow fiber membrane and a flat membrane. The separation membrane 93 is, for example, a reverse osmosis (RO) membrane, a nano-filtration (NF) membrane, an ultra-filtration (UF) membrane, or a micro filtration (MF) membrane. The separation membrane 93 may be a membrane other than these.

The air diffusion pipe 94 may be any pipe that is capable of supplying bubbles. Materials thereof that can be used are glass, stainless steel, sintered metal, resin and the like. The air diffusing apparatus 95 may be any apparatus that can pressure-feed air, such as a blower.

### (Operation data acquiring apparatus 4)

The operation data acquiring apparatus 4 acquires operation data measured during the membrane filtration operation using various sensors or the like. The operation data according to the present embodiment includes at least the membrane filtration pressure, air diffusion amount and membrane filtration flow rate. The membrane filtration pressure is acquired from a nanometer disposed in the filtered water pipe 96 between the separation membrane 93 and the filtration pump 97, for example. The air diffusion amount is the amount of air supplied by the air diffusing apparatus 95, and is directly acquired from the air diffusing apparatus 95. The membrane filtration flow rate is acquired from a flow meter disposed in the filtered water pipe 96, for example. The operation data acquiring apparatus 4 sends the acquired operation data to the input data calculating apparatus 5.

### (Input data calculating apparatus 5)

From the received operation data, the input data calculating apparatus 5 derives input data to be inputted to the learning model generating apparatus 1, the inference apparatus 2 and the input data determining apparatus 6. The input data is data indicating a feature value of the operation data, and includes a case where the input data is the operation data itself, and a case where the input data is acquired by performing calculation on the operation data. In the phase of generating the learning model, the input data calculating apparatus 5 sends the calculated input data directly to the learning model generating apparatus 1, or to the storage apparatus 7 to store the input data. In the phase of inferring the state of the separation membrane 93, the input data calculating apparatus 5 sends the calculated input data to the inference apparatus 2. In the phase of determining the input data, the input data calculating apparatus 5 sends the calculated input data to the input data determining apparatus 6. The input data will be described in detail later.

### (Learning model generating apparatus 1)

The learning model generating apparatus 1 generates a learning model to infer a state of the separation membrane 93 by machine learning, the input to which is the received input data, and stores the learning model in the storage apparatus 3. The learning model will be described in detail later.

### (Storage apparatus 3)

The storage apparatus 3 stores the learning model generated by the learning model generating apparatus 1. The storage apparatus 3 may store programs and data other than a learning model. The membrane scouring airflow control program according to the present embodiment has been stored in the storage apparatus 3. However the membrane scouring airflow control program, according to the present embodiment, is not limited to being stored in the storage apparatus 3, but may be stored in a computer-readable storage medium in advance and be distributed thereby, or may be downloaded to the membrane scouring airflow control system 100 via a network.

### (Inference apparatus 2)

The inference apparatus 2 accesses a learning model stored in the storage apparatus 3, and using the learning model, infers a state of the separation membrane 93 from the input data received from the input data calculating apparatus 5. The inference of the state of the separation membrane 93 will be described in detail later.

### (Input data determining apparatus 6)

The input data determining apparatus 6 receives input data from the input data calculating apparatus 5, and determines the received input data. For example, the input data received by the input data determining apparatus 6 includes a change speed of the membrane filtration flow rate during the membrane filtration operation. For example, the input data determining apparatus 6 determines whether the change speed of the membrane filtration flow rate during the membrane filtration operation is faster than a predetermined speed (that is, threshold). Determination of the input data by the input data determining apparatus 6 will be described in detail later.

### (Air diffusion amount controlling apparatus 8)

The air diffusion amount controlling apparatus 8 determines a level (first level) of the air diffusion amount of the air diffusing apparatus 95 in accordance with the inference result by the inference apparatus 2 (hereafter also called "air diffusion amount level"), and controls the air diffusing apparatus 95 so as to diffuse air at a determined air diffusion amount level. This control is an example of the "first control" of the present invention. For example, the air diffusion amount controlling apparatus 8 decreases the air diffusion amount level from the current value if the inference result by the inference apparatus 2 is "normal", or increases the air diffusion amount level from the current value if the inference result by the inference apparatus 2 is "abnormal".

The increase amount or decrease amount of the air diffusion amount level may be a fixed value or a variable value. In the latter case, the air diffusion amount controlling apparatus 8 may determine the current variable value in accordance with the most recent increase/decrease state of the air diffusion amount level, for example.

For example, in a case where "normal" is acquired as the inference result, the air diffusion amount controlling apparatus 8 decreases the decrease amount in accordance with a number of times when the air diffusion amount level was recently increased, or increases the decrease amount in accordance with a number of times when the air diffusion amount level was recently decreased. On the other hand, in a case where "abnormal" is acquired as the inference result, for example, the air diffusion amount controlling apparatus 8 increases the increase amount in accordance with a number of times when the air diffusion amount level was recently increased, or decreases the decrease amount in accordance with a number of times when the air diffusion amount level was recently decreased.

Further, when the input data determined by the input data determining apparatus 6 becomes a first threshold or more or a second threshold or less, the air diffusion amount controlling apparatus 8 determines a level (second level) of the air diffusion amount of the air diffusing apparatus 95 in accordance with the input data determined by the input data determining apparatus 6, and controls the air diffusing apparatus 95 so as to diffuse air at the determined air diffusion level. This control is an example of "second control" of the present invention.

For example, the air diffusion amount controlling apparatus 8 determines the level of the air diffusion amount of the air diffusing apparatus 95 to a second level, which is higher than the first level, if the positive change speed of the membrane filtration flow rate determined by the input data determining apparatus 6 is the first threshold or more. For example, the air diffusion amount controlling apparatus 8 determines the level of the air diffusion amount of the air diffusing apparatus 95 as the second level, which is lower than the first level, if the negative change speed of the membrane filtration flow rate determined by the input data determining apparatus 6 is the second threshold or less.

### <Cycle of membrane filtration operation>

Fig. 2 is a graph depicting a time-dependent change of a membrane filtration pressure that is measured during the membrane filtration operation executed by the membrane separating apparatus.

A cycle of the membrane filtration operation (hereafter also called "unit period") will be described with reference to Fig. 2. The cycle of the membrane filtration operation includes an operation period to execute the membrane filtration operation (e.g. about 9 minutes) and a pause period not to execute the membrane filtration operation (e.g. about 1 minute) are repeated alternately. In other words, the pause period is executed following the operation period. The membrane filtration operation is an intermittent operation in which this cycle is repeated.

In the membrane scouring airflow control system 100, every time the operation period ends and the pause period begins, the input data calculating apparatus 5 derives the input data using the operation data which the operation data acquiring apparatus 4 acquired during the operation period, for example. Then following this, the inference apparatus 2 infers the state of the separation membrane 93, and controls the air diffusing apparatus 95 in accordance with the inference result. This control is an example of the "first control" of the present invention. Thereby the membrane scouring airflow control system 100 can appropriately control the air diffusion amount of the air diffusing apparatus 95 for each cycle of the membrane filtration operation, based on the inference of the state of the separation membrane 93.

Further, in the membrane scouring airflow control system 100, when the pause period ends and the operation period begins, the input data calculating apparatus 5 derives the input data using the operation data which the operation data acquiring apparatus 4 acquired during the operation period, for example. Then following this, the input data determining apparatus 6 determines the input data received from the input data calculating apparatus 5, and controls the air diffusing apparatus 95 in accordance with the determination result. This control is an example of "second control" of the present invention. Thereby even if the conditions of the membrane filtration operation suddenly changes, the membrane scouring airflow control system 100 can quickly handle the sudden change of the conditions of the membrane filtration operation, and minimize generation of delay in the control of the air diffusion amount.

### <Major configuration of learning model generating apparatus 1>

Fig. 3 is a block diagram depicting an example of a major configuration of the learning model generating apparatus and the inference apparatus.

The learning model generating apparatus 1 includes a control unit 10. The control unit 10 comprehensively controls each portion of the learning model generating apparatus 1, and is implemented by a processor and a memory, for example. In this example, the processor accesses a storage (not illustrated), and loads a program (not illustrated) stored in the storage into memory, and executes a series of instructions included in the program. Each portion of the control unit 10 is configured thereby.

The control unit 10 includes, as respective units thereof, an input data acquiring unit 11, a training data generating unit 12, and a learning unit 13. The input data acquiring unit 11, the training data generating unit 12 and the learning unit 13 are implemented by a computer executing the programs stored in the storage. The term "computer" here is not limited to a personal computer, but includes an arithmetic processing unit, a microcomputer, and the like included in an information processing device, and is a general term for devices and apparatuses which can implement the functions of the present invention using programs. The input data acquiring unit 11, the training data generating unit 12, and the learning unit 13 may be implemented by hardware, or may be implemented by a combination of hardware and software.

### (Input data acquiring unit 11)

The input data acquiring unit 11 acquires input data directly from the input data calculating apparatus 5, or acquires input data from the storage apparatus 7 storing the input data calculated by the input data calculating apparatus 5. Then the input data acquiring unit 11 outputs the acquired input data to the training data generating unit 12.

### (Specific example of input data)

Fig. 4 is a table indicating a specific example of input data derived from the operation data.

From the membrane filtration pressure (operation data), the input data calculating apparatus 5 calculates a maximum value of the membrane filtration pressure, a minimum value of the membrane filtration pressure, a standard deviation of the membrane filtration pressure, an average value of the membrane filtration pressure, a trans-membrane pressure, a change speed of the trans-membrane pressure, a change amount of the trans-membrane pressure, and a change rate of the trans-membrane pressure, for example.

The maximum value of the membrane filtration pressure (hereafter called "maximum membrane filtration pressure") is a maximum value of the membrane filtration pressure in a certain cycle of the membrane filtration operation (hereafter called "target cycle"). The minimum value of the membrane filtration pressure (hereafter called "minimum membrane filtration pressure") is a minimum value of the membrane filtration pressure in a target cycle. The standard deviation of the membrane filtration pressure is a standard deviation of the membrane filtration pressure in a target cycle. The average value of the membrane filtration pressure (hereafter called "average membrane filtration pressure") is an average value of the membrane filtration pressure in a target cycle.

The trans-membrane pressure (TMP) is a difference between a pressure applied to the water to be treated 92 side and the pressure applied to the treated water side of the separation membrane **93.** The change speed of the trans-membrane pressure is calculated as an inclination of the trans-membrane pressure (**Δ**TMP/**Δ**T) in a predetermined period (hereafter called "P") from a predetermined point in the target cycle. P is an appropriate value selected in a range of several hours to several days. For example, the change speed of the trans-membrane pressure may be calculated as an inclination of a regression model (linear regression) in the time-dependent change of the trans-membrane pressure in P. Here it may be assumed that the change speed of the trans-membrane pressure never becomes a negative value. The change amount of the trans-membrane pressure is a change amount of the trans-membrane pressure in P. For example, the change amount of the trans-membrane pressure is calculated as a difference between the value of TMP at a predetermined point in time and a value of TMP at a point in time when P has elapsed. The change rate of the trans-membrane pressure is a change rate in P. For example, the change rate of the trans-membrane pressure is calculated by dividing the change speed of the trans-membrane pressure by the trans-membrane pressure (**Δ**TMP/(TMP × **Δ**T)).

The input data calculating apparatus 5 also calculates an average value of the air diffusion amount and an integrated value of the air diffusion amount, for example, from the air diffusion amount (operation data). The average value of the air diffusion amount (hereafter called "average air diffusion amount") is an average value of the air diffusion amount in a target cycle. The integrated value of the air diffusion amount (hereafter called "integrated air diffusion amount") is an integrated value of the air diffusion amount in P, and is calculated as the integrated value of the average diffusion amount in P, for example.

The input data calculating apparatus 5 also calculates an average value of the membrane filtration flow rate, an integrated value of the membrane filtration flow rate, a change speed of the membrane filtration flow rate, and a change amount of the membrane filtration flow rate, for example, from the membrane filtration flow rate (operation data). The average value of the membrane filtration flow rate (hereafter called "average membrane filtration flow rate") is an average value of the membrane filtration flow rate in a target cycle. The integrated value of the membrane filtration flow rate (hereafter called "integrated membrane filtration flow rate") is an integrated value of the membrane filtration flow rate in P, and is calculated as the integrated value of the average membrane filtration flow rate in P, for example. The change speed of the membrane filtration flow rate is calculated as an inclination of the membrane filtration flow rate (or **Δ**Flux/**Δ**T) in P. P in this case is an appropriate value selected in a range of several seconds to several minutes. The change amount of the membrane filtration flow rate is a change amount of the membrane filtration flow rate in P. For example, the change amount of the membrane filtration flow rate is calculated as a difference between a value of the membrane filtration flow rate at a predetermined point in time and a value of the membrane filtration flow rate at a point in time when P has elapsed. Just like the case of the change speed of the membrane filtration flow rate, P in this case is an appropriate value selected in a range of several seconds to several minutes.

Although not shown, the input data is correlated with time information, indicating the time when the operation data (deriving source of the input data) was acquired.

### (Training data generating unit 12)

The training data generating unit 12 generates training data where the input data and a label indicating the state of the separation membrane 93 in the input data are correlated. Then the training data generating unit 12 outputs the generated training data to the learning unit 13.

The label includes a "normal label", which is correlated to the input data where the state of the separation membrane 93 in the futures becomes normal, and an "abnormal label", which is correlated to the input data where the state of the separation membrane 93 in the future becomes abnormal. The types of labels are not limited to two, but may be three or more.

The input data and the label may be correlated manually based on the determination of an operator skilled in the art, or may be correlated automatically. In the case of manual correlation, the training data generating unit 12 may provide an input/output interface for correlation. In the following, an example of an automatic correlating method will be described.

First the training data generating unit 12 specifies an operation state at a time when the operation data (deriving source of the target input data) was acquired (this time is called "current time"). For the conditions to specify the operation state, the following two conditions are preferable: (first condition) the change speed of the trans-membrane pressure is less than a first predetermined value; and (second condition) the trans-membrane pressure is less than a second predetermined value. These are typical conditions for the state of the separation membrane 93 to be normal. If these conditions are satisfied, the state of the separation membrane 93 can be regarded as normal. The first predetermined value is 0.08 kPa/h and the second predetermined value is 10 kPa, for example. However the first predetermined value and the second predetermined value are not limited to these values respectively.

Then the training data generating unit 12 specifies the input data correlated to time information, which indicates a first predetermined time before the current time (hereafter called "first input data"), and also specifies the input data correlated to time information, which indicates a second predetermined time before the current time (hereafter called "second input data"). The first predetermined time is 3 hours, and the second predetermined time is 24 hours, for example. However the first predetermined time and the second predetermined time are not limited to these values respectively.

Then the training data generating unit 12 correlates the satisfiability of the first condition at a current time to the first input data. In other words, the first input data is correlated to "whether the change speed of the trans-membrane pressure 3 hours later is less than the first predetermined value or not".

Further, the training data generating unit 12 correlates the satisfiability of the second condition at a current time to the second input data. In other words, the second input data is correlated to "whether the trans-membrane pressure 24 hours later is less than the second predetermined value or not".

Then the training data generating unit 12 replaces the target input data, and repeats the execution of the above processing steps for all input data to be processed. As a result, for each of the input data, (1) the satisfiability of the first condition in the first predetermined time later, and (2) satisfiability of the second condition in the second predetermined time later, are specified as the operation conditions in the future.

Then the training data generating unit 12 determines that the input data which satisfies both of the above mentioned (1) and (2) make the state of the separation membrane 93 normal in the future, and correlates the "normal label" to this input data. The training data generating unit 12 determines that the input data which does not satisfy at least one of the above mentioned (1) and (2) does not make the state of the separation membrane 93 normal in the future, and correlates the "abnormal label" to this input data. Thereby the training data generating unit 12 automatically correlates the input data and the label.

Specific conditions are not limited to the first condition and the second condition described above. Further, a number of specific conditions is not limited to 2, and may be 1 or 3 or more. As a number of specific conditions becomes larger, accurate labeling based on a plurality of standards becomes possible, and improvement of the inference accuracy of the inference apparatus 2 is expected.

### (Learning unit 13)

Referring to Fig. 3, again, the learning unit 13 will be described. The learning unit 13 generates a learning model 31 to infer a state of the separation membrane 93, based on machine learning, the input to which is training data generated by the training data generating unit 12. The learning unit 13 stores the generated learning model 31 in the storage apparatus **3.** The learning unit 13 uses a plurality of training data acquired from the training data generating unit 12 and generates a learning model 31 by a known algorithm, such as a neural network (NN). Thereby when input data is inputted, the learning model 31, to output probability for the state of the separation membrane 93 in the future to become a normal state (or a probability to becomes an abnormal state), is generated.

### <Major configuration of inference apparatus 2>

The inference apparatus 2 includes a control unit 20. The control unit 20 comprehensively controls each portion of the inference apparatus 2, and is implemented by a processor and memory, for example. In this example, the processor accesses a storage (not illustrated) and loads a program (not illustrated) stored in the storage to the memory, and executes a series of instructions included in the program. Each portion of the control unit 20 is configured thereby.

As each portion of the control unit 20, the control unit 20 includes an input data acquiring unit 21 and an access unit 22. The input data acquiring unit 21 and the access unit 22 are implemented by a computer executing the programs stored in the storage. The term "computer" here is not limited to a personal computer, but includes an arithmetic processing unit, a microcomputer, and the like included in an information processing device, and is a general term for devices and apparatuses which can implement the functions of the present invention using programs. The input data acquiring unit 21 and the access unit 22 may be implemented by hardware or may be implemented by a combination of hardware and software.

### (Input data acquiring unit 21)

The input data acquiring unit 21 acquires input data from the input data calculating apparatus 5, and outputs the acquired data to the access unit 22. The input data to be outputted to the access unit 22 is preferably data derived from operation data which was measured in the most recent membrane filtration operation.

### (Access unit 22)

The access unit 22 accesses the learning model 31 stored in the storage apparatus 3. The access unit 22 includes an inference unit 23.

Using the learning model 31 accessed by the access unit 22, the inference unit 23 infers a state of the separation membrane 93 based on the input data acquired from the input data acquiring unit 21. Specifically, the inference unit 23 acquires a probability for the state of the separation membrane 93 to become normal (or a probability to become abnormal), which is outputted from the learning model 31 as a result of inputting the input data to the learning model 31. The probability acquired by the inference unit 23 is a probability for the state of the separation membrane 93 in the future to become normal in the case where the membrane filtration operation is continued under the current operation conditions.

Based on the probability value acquired from the learning model 31, the inference unit 23 infers whether the state of the separation membrane 93 in the future becomes normal or abnormal. Specifically, the inference unit 23 infers whether the state of the separation membrane 93 in the future becomes normal if the probability value is a threshold or more. On the other hand, the inference unit 23 infers whether the state of the separation membrane 93 in the future becomes abnormal if the probability value is less than the threshold. The threshold is 50 (%), for example. However the threshold is not limited to this example. Further, the state of the separation membrane 93 to be inferred is not limited to the 2 states "normal" and "abnormal", and may be 3 states or more. In the case of 3 states, "normal", "intermediate state between normal and abnormal" and "abnormal" are inferred, for example.

The inference unit 23 outputs the inference result to the air diffusion amount controlling apparatus 8. The inference unit 23 may output the probability value itself, acquired from the learning model 31, to the air diffusion amount controlling apparatus 8 as the inference result.

The control unit 20 (input data acquiring unit 21 or the inference unit 23) may store the input data used for the inference to the storage apparatus 7 in order to cause the learning model generating apparatus 1 to update the learning model 31 (to relearn the learning model 31) using this input data for inference.

### <Major configuration of input data determining apparatus 6>

Fig. 5 is a block diagram depicting an example of the major configuration of the input data determining apparatus.

The input data determining apparatus 6 includes a control unit 60. The control unit 60 comprehensively controls each portion of the input data determining apparatus 6, and is implemented by a processor and memory, for example. In this example, the processor accesses a storage (not illustrated) and loads a program (not illustrated) stored in the storage to the memory, and executes a series of instructions included in the program. Each portion of the control unit 60 is configured thereby.

As each portion of the control unit 60, the control unit 60 includes an input data acquiring unit 61 and a determining unit 63. The input data acquiring unit 61 and the determining unit 63 are implemented by a computer executing the programs stored in the storage. The term "computer" here is not limited to a personal computer, but includes an arithmetic processing unit, a microcomputer, and the like included in an information processing device, and is a general term for devices and apparatuses which can implement the functions of the present invention using programs. The input data acquiring unit 61 and the determining unit 63 may be implemented by hardware or may be implemented by a combination of hardware and software.

### (Input data acquiring unit 61)

The input data acquiring unit 61 acquires input data from the input data calculating apparatus 5, and outputs the acquired data to the determining unit 63. The input data to be outputted to the determining unit 63 is preferably data derived from operation data which was measured in the most recent membrane filtration operation.

### (Determining unit 63)

The determining unit 63 determines the input data acquired from the input data acquiring unit 61. Specifically, the input data acquired from the input data acquiring unit 61 is a change speed of the membrane filtration flow rate during the membrane filtration operation. The determining unit 63 determines whether the change speed of the membrane filtration flow rate during the membrane filtration operation is a first threshold or more, or a second threshold or less. For example, the determining unit 63 determines whether the change speed of the membrane filtration flow rate during the membrane filtration operation is faster than a predetermined speed (that is, threshold). Specifically, the determining unit 63 determines whether the positive change speed of the membrane filtration flow rate during the membrane filtration operation is the first threshold or more. Further, the determining unit 63 determines whether the negative change speed of the membrane filtration flow rate during the membrane filtration operation is the second threshold or less. Then the determining unit 63 outputs the determination result to the air diffusion amount controlling apparatus 8.

### <Flow of learning model generating processing>

Fig. 6 is a flow chart depicting an example of a flow of learning model generating processing executed by the learning model generating apparatus.

The learning model generating processing in Fig. 6 is processing to generate a new learning model 31, and is not processing to update a learning model 31. In this example, it is assumed that the state of the separation membrane 93 is normal when both the (first condition) where the change speed of the trans-membrane pressure is less than the first predetermined value, and the (second condition) where the trans-membrane pressure is less than the second predetermined value are satisfied. The input data and the label are correlated automatically in this example.

First the input data acquiring unit 11 acquires a plurality of input data from the input data calculating apparatus 5 or the storage apparatus 7 (step S1, hereafter "step" is omitted). The input data acquiring unit 11 outputs the acquired plurality of input data to the training data generating unit 12.

The training data generating unit 12 specifies the operation state in the future for each input data using the above mentioned method (S2). Specifically, for each input data, the training data generating unit 12 specifies (1) the satisfiability of the first condition in the first predetermined time later, and (2) the satisfiability of the second condition in the second predetermined time later.

Then to each of the input data, the training data generating unit 12 correlates a label which indicates a state of the separation membrane 93 in the future, whereby the training data is generated (S3). Specifically, a "normal label" is correlated to the input data that satisfies both (1) and (2) mentioned above, whereas an "abnormal label" is correlated to the input data which does not satisfy at least one of (1) and (2) mentioned above. Then the training data generating unit 12 outputs the generated training data to the learning unit 13.

Then based on the training data generated by the training data generating unit 12, the learning unit 13 generates a learning model 31 which outputs a probability for the state of the separation membrane 93 to be normal (or probability to be abnormal) (S4). Finally the learning unit 13 stores the generated learning model 31 to the storage apparatus 3 (S5). Thereby the learning model generating processing ends.

### <Flow of learning model update processing>

Fig. 7 is a flow chart depicting an example of a flow of learning model updating processing executed by the learning model generating apparatus.

The learning model updating processing in Fig. 7 is processing to update a learning model 31 based on the input data newly acquired by executing the membrane filtration operation, after the learning model 31 is generated in the learning model generating processing in Fig. 6. In this example as well, it is assumed that the state of the separation membrane 93 is normal when both the (first condition) where the change speed of the trans-membrane pressure is less than the first predetermined value, and the (second condition) where the trans-membrane pressure is less than the second predetermined value are satisfied, as mentioned above. The input data and the label are correlated automatically.

The input data acquiring unit 11 stands by until the input data, which the inference apparatus 2 used for inference, is acquired from the input data calculating apparatus 5 or the storage apparatus 7 (S11). When the input data is acquired (S11: YES), the input data acquiring unit 11 outputs the acquired input data to the training data generating unit 12.

The training data generating unit 12 specifies the operation state at the timing when the operation data, (the deriving source of the acquired input data) was acquired (S12). In other words, the training data generating unit 12 specifies the satisfiability of the first condition and that of the second condition at the timing when the operation data was acquired.

Then the training data generating unit 12 correlates the satisfiability of the first condition to the input data, which is correlated to the time information indicating a time the first predetermined time before the timing at which the operation data was acquired, and correlates the satisfiability of the second condition to the input data, which is correlated to a time information indicating a time that is the second predetermined time before the timing at which the operation data was acquired. These input data are data acquired in the past, and have been stored in the storage apparatus 7.

The training data generating unit 12 attaches a label to the input data which is correlated to both (1) the satisfiability of the first condition after the first predetermined time, and (2) the satisfiability of the second condition after the second predetermined time, in accordance with the satisfiability of (1) and (2) mentioned above (S13). Then the training data generating unit 12 outputs the generated training data to the learning unit 13.

The learning unit 13 performs relearning based on the training data generated by the training data generating unit 12 this time, and updates the learning model 31 thereby (S14). Then the learning model updating processing returns to S11.

By updating the learning model 31 like this, the inference processing by the inference apparatus 2 can be the inference processing that matches with the most recent operation state.

### <Flow of inference processing and air diffusion amount controlling processing>

Fig. 8 is a flow chart depicting an example of a flow of the inference processing executed by the inference apparatus and the air diffusion amount controlling processing executed by the air diffusion amount controlling apparatus.

The processing in Fig. 8 is an example of "first control" of the present invention.

The input data acquiring unit 21 stands by until input data is acquired from the input data calculating apparatus 5 (S21). When the input data is acquired (S21: YES), the input data acquiring unit 21 outputs the acquired input data to the access unit 22.

When the input data is acquired, the access unit 22 accesses the learning model 31 stored in the storage apparatus 3 (S22). The inference unit 23 included in the access unit 22 inputs the input data to the learning model 31 (S23), and acquires a probability for the state of the separation membrane 93 to be normal, for example, by the learning model 31 (S24).

Then the inference unit 23 determines whether the acquired probability value is a threshold or more, for example (S25). If it is determined that the acquired probability value is the threshold or more (S25: YES), the inference unit 23 infers that the state of the separation membrane 93 becomes normal (S26). If it is determined that the acquired probability value is less than the threshold (S25: NO), on the other hand, the inference unit 23 infers that the state of the separation membrane 93 becomes abnormal (S27). The inference unit 23 outputs the inference result to the air diffusion amount controlling apparatus 8.

Based on the acquired inference result and the most recent air diffusion amount level, the air diffusion amount controlling apparatus 8 determines the first level of the next air diffusion amount (S28). Then the air diffusion amount controlling apparatus 8 controls the air diffusing apparatus 95 so as to diffuse air at the determined first level of the air diffusion amount (S29). Then the processing returns to S21.

Here in the case where an amount of the water to be treated 92, that flows in the membrane separation tank 91, increases, or an amount of the water to be treated 92, stored in the membrane separation tank 91, increases, the membrane separating apparatus 90 may have to increase the membrane filtration flow rate or Flux. In the case of the first control described with respect to Fig. 8, estimation (inference) is performed using the machine learning model for each cycle of the membrane filtration operation (intermittent operation), and the air diffusion amount level is controlled thereby, hence the diffusion amount level can be controlled accurately in accordance with the input data, such as the trans-membrane pressure. However if the condition of the membrane filtration operation suddenly changes (e.g. sudden increase in membrane filtration flow rate, sudden decrease in the membrane filtration flow rate), the sudden change of the operation condition may not be handled quickly, and delay may be generated in the control of the air diffusion amount. This will be further described with reference to the drawings.

### <Flow of input data determining processing and air diffusion amount controlling processing>

Fig. 9 is a flow chart depicting an example of a flow of the input data determining processing executed by the input data determining apparatus and the air diffusion amount controlling processing executed by the air diffusion amount controlling apparatus.

Fig. 10 is a graph depicting an example of the relationship of the membrane filtration flow rate, the trans-membrane pressure and time.

Fig. 11 is a graph depicting an example of the relationship of the air diffusion amount and time.

Fig. 12 is a graph depicting an example of the relationship of the membrane filtration flow rate, the air diffusion amount and time.

The processing in Fig. 9 is an example of the "second control" of the present invention. The processing to be described with reference to Figs. 6 to 9 is an example of the membrane scouring airflow control method according to the present embodiment.

The abscissa of the graph in Fig. 10 indicates time. The ordinate of the graph in Fig. 10 indicates the membrane filtration flow rate and the trans-membrane pressure.

The abscissa of the graph in Fig. 11 indicates time. The ordinate of the graph in Fig. 11 indicates the air diffusion amount.

The abscissa of the graph in Fig. 12 indicates time. The ordinate of the graph in Fig. 12 indicates the membrane filtration flow rate and the air diffusion amount.

The "air diffusion amount" indicated in Fig. 11 is an air diffusion amount determined by the air diffusion amount controlling apparatus 8, that is, a control amount. The "membrane filtration flow rate" and the "air diffusion amount" indicated in Fig. 12 are measured values.

As indicated in Fig. 9, the input data acquiring unit 61 stands by until the input data is acquired from the input data calculating apparatus 5 (S31). When the input data is acquired (S31: YES), the input data acquiring unit 61 outputs the acquired input data to the determining unit 63.

When the input data is acquired, the determining unit 63 determines whether the input data acquired from the input data acquiring unit 61 is the first threshold or more or the second threshold or less (S32). Specifically, the determining unit 63 determines whether the positive change speed of the membrane filtration flow rate during the membrane filtration operation is the first threshold or more, or the determining unit 63 determines whether the negative change speed of the membrane filtration flow rate during the membrane filtration operation is the second threshold or less.

If the input data acquired from the input data acquiring unit 61 is not the first threshold or more and is not the second threshold or less (S32: NO), processing returns to S31.

If the input data acquired from the input data acquiring unit 61 is the first threshold or more or the second threshold or less (S32: YES), on the other hand, the air diffusion amount controlling apparatus 8 determines the second level of the air diffusion amount in accordance with the change speed of the membrane filtration flow rate (S33). Now an example when the positive change speed of the membrane filtration flow rate during the membrane filtration operation becomes the first threshold or more, and an example when the negative change speed of the membrane filtration flow rate during the membrane filtration operation becomes the second threshold or less, will be described with reference to Figs. 10 to 12.

In Figs. 10 to 12, time T1 indicates a timing when the membrane filtration flow rate (Flux) suddenly increased. In other words, the positive change speed of the membrane filtration flow rate (Flux) becomes the first threshold or more at time T1. In Figs. 10 and 11, time T2 indicates a timing when the membrane filtration flow rate (Flux) suddenly decreased. In other words, the negative change speed of the membrane filtration flow rate (Flux) becomes the second threshold or less at time T2.

In the first control, which was described with reference to Fig. 8, estimation (inference) is performed for each cycle of the membrane filtration operation (intermittent operation) using the machine learning model, and the air diffusion amount level is controlled thereby, hence as indicated in Fig. 11, the air diffusion amount in the case of the first control does not increase immediately at the timing of time T1. In the graph in Fig. 11, the air diffusion amount in the case of the first control increases about 16 minutes later after the timing of time T1. In the example of the graph in Fig. 11, the cycle of the membrane filtration operation includes an operation period to execute the membrane filtration operation (e.g. about 9 minutes), and a pause period to not execute the membrane filtration operation (e.g. about 1 minute).

The air diffusion amount in the case of the first control does not increase immediately at the timing of time T1, but increases about 16 minutes after the timing of time T1, hence as indicated in Fig. 10, the trans-membrane pressure (TMP), in the case of the first control, gradually increases and continues increasing for 6 cycles of the membrane filtration operation from time T1. Then at time T2 when the membrane filtration flow rate drops, the trans-membrane pressure, in the case of the first control, drops. As indicated in Fig. 11, even at time T2 when the membrane filtration flow rate suddenly decreases, the air diffusion amount, in the case of the first control, does not decrease immediately at the timing of time T2. In this way, if delay is generated in the control of the air diffusion amount, the time block in which the air diffusion amount becomes insufficient may be generated in the case of a sudden increase of the membrane filtration flow rate, and in this case, inter-membrane clogging may progress. On the other hand, a time block in which the air diffusion amount becomes excessive may be generated in the case of a sudden decrease of the membrane filtration flow rate, and in this case, implementation of energy conservation may become difficult.

In the case of the membrane scouring airflow control system 100 according to the present embodiment, on the other hand, if the positive change speed of the membrane filtration flow rate during the membrane filtration operation is the first threshold or more, or if the negative change speed thereof is the second threshold or less in S32, which follows S31 in Fig. 9 (S32: YES), the air diffusion amount controlling apparatus 8 determines the second level of the air diffusion amount in accordance with the change speed of the membrane filtration flow rate (S33). If the positive change speed of the membrane filtration flow rate, determined by the input data determining apparatus 6, is the first threshold or more, for example, the air diffusion amount controlling apparatus 8 determines the level of the air diffusion amount of the air diffusing apparatus 95 as the second level, which is higher than the first level. Further, if the negative change speed of the membrane filtration flow rate, determined by the input data determining apparatus 6, is the second threshold or less, for example, the air diffusion amount controlling apparatus 8 determines the level of the air diffusion amount of the air diffusing apparatus 95 as the second level, which is lower than the first level. Then the air diffusion amount controlling apparatus 8 controls the air diffusing apparatus 95 so as to diffuse air at the determined second level of the air diffusion amount (S34). Then the processing returns to S31.

In the second control, which was described with reference to Fig. 9, the air diffusion amount controlling apparatus 8 executes interrupt processing, which is different from the processing of machine learning, when the input data determined by the input data determining apparatus 6 (specifically the positive change speed of the membrane filtration flow rate) becomes the first threshold or more, hence the air diffusion amount in the case of the second control increases immediately at the timing of time T1, as indicated in Fig. 11. Further, the air diffusion amount controlling apparatus 8 executes the interrupt processing, which is different from the processing of machine learning, when the input data, determined by the input data determining apparatus 6 (specifically, the negative change speed of membrane filtration flow rate), becomes the second threshold or less, hence the air diffusion amount in the case of the second control decreases immediately at the timing of time T2, as indicated in Fig. 11. Therefore the trans-membrane pressure in the case of the second control is suppressed at the lower differential pressure compared with the trans-membrane pressure in the case of the first control, as indicated in Fig. 10.

Even in the graph in Fig. 12, which is plotted with measured values as well, the air diffusion amount in the case of the second control increases immediately at the timing of time T1. The air diffusion amount of the comparative example (case of first control), on the other hand, does not increase immediately at the timing of time T1, and is increased by control of the air diffusion amount by machine learning in the pause period when the membrane filtration operation is not executed.

As described above, according to the membrane scouring airflow control system 100 of the present embodiment, the learning model generating apparatus 1 generates a learning model 31 to infer a state of the separation membrane 93 based on the operation data measured during the membrane filtration operation performed by the membrane separating apparatus 90. Once the inference apparatus 2 can infer the state of the separation membrane 93, the air diffusion amount controlling apparatus 8 can execute the first control of the air diffusing apparatus 95, so that air is diffused at the first level of the air diffusion amount determined in accordance with the state of the separation membrane 93, hence a stable membrane filtration operation can be performed while maintaining the state where the separation membrane 93 is normal (e.g. state where the probability of a sudden rise of the trans-membrane pressure is low). Further, when the input data becomes the first threshold or more or the second threshold or less, the air diffusion amount controlling apparatus 8 executes the second control of the air diffusing apparatus 95, so that the air is diffused at the second level of the air diffusion amount determined in accordance with the input data. Therefore even if the condition of the membrane filtration operation suddenly changes, the air diffusion amount controlling apparatus 8 executes interrupt processing, which is different from the processing of the machine learning, so that the sudden change of the condition of the membrane filtration operation can be quickly handled, and generation of delay in the control of the air diffusion amount can be minimized. As a result, the generation of the time block where the air diffusion amount becomes insufficient, or generation of the time block where the air diffusion amount becomes excessive can be minimized during the membrane filtration operation. Thereby the membrane scouring airflow control system 100, according to the present embodiment, can improve the stability of the membrane filtration operation and energy conservation.

When the change speed of the membrane filtration flow rate becomes the first threshold or more or the second threshold or less, the air diffusion amount controlling apparatus 8 executes the second control of the air diffusing apparatus, so that the air is diffused at the second level of the air diffusion amount determined in accordance with the change speed of the membrane filtration flow rate. Therefore even if the membrane filtration flow rate suddenly increases or suddenly decreases, the air diffusion amount controlling apparatus 8 executes interrupt processing, which is different from the processing of the machine learning, so that the sudden change of the membrane filtration flow rate can be quickly handled, and the generation of delay in controlling of the air diffusion amount can be minimized.

When the positive change speed of the membrane filtration flow rate becomes the first threshold or more, the air diffusion amount controlling apparatus 8 determines the level of the air diffusion amount of the air diffusing apparatus 95 as the second level, which is higher than the first level. When the negative change speed of the membrane filtration flow rate becomes the second threshold or less, the air diffusion amount controlling apparatus 8 determines the level of the air diffusion amount of the air diffusing apparatus 95 as the second level, which is lower than the first level. Then the air diffusion amount controlling apparatus 8 executes the second control of the air diffusing apparatus 95, so that air is diffused at the second level of the air diffusion amount. Therefore even if the membrane filtration flow rate suddenly increases, the air diffusion amount controlling apparatus 8 executes interrupt processing, which is different from the processing of the machine learning, so that generation of the time block where the air diffusion amount becomes insufficient can be minimized, and progress of inter-membrane clogging can be suppressed. Further, even if the membrane filtration flow rate suddenly decreases, the air diffusion amount controlling apparatus 8 executes interrupt processing, which is different from the processing of the machine learning, so that generation of the time block where the air diffusion amount becomes excessive can be minimized. Thereby, according to the membrane scouring airflow control system 100 of the present embodiment, stability of the membrane filtration operation and energy conservation can be improved with further certainty.

Furthermore, the learning model generating apparatus 1 updates the learning model 31 by machine learning using the data which was inputted to the learning model 31 when the inference apparatus 2 inferred a state of the separation membrane 93, hence the inference accuracy of the learning model 31 can be improved each time the inference apparatus 2 performs inference.

Embodiments of the present invention were described above. The present invention, however, is not limited to the above embodiments, but may be changed in various ways within a scope not departing from the claims. The composing elements of the above embodiments may be partially omitted or may be combined in a way that is different from the above description.

### [Reference Signs List]

- 1: Learning model generating apparatus
- 2: Inference apparatus
- 3: Storage apparatus
- 4: Operation data acquiring apparatus
- 5: Input data calculating apparatus
- 6: Input data determining apparatus
- 7: Storage apparatus
- 8: Air diffusion amount controlling apparatus
- 10: Control unit
- 11: Input data acquiring unit
- 12: Training data generating unit
- 13: Learning unit
- 20: Control unit
- 21: Input data acquiring unit
- 22: Access unit
- 23: Inference unit
- 31: Learning model
- 60: Control unit
- 61: Input data acquiring unit
- 63: Determining unit
- 90: Membrane separating apparatus
- 91: Membrane separation tank
- 92: Water to be treated
- 93: Separation membrane
- 94: Air diffusion pipe
- 95: Air diffusing apparatus
- 96: Filtered water pipe
- 97: Filtration pump
- 100: Membrane scouring airflow control system

## Claims

1. A membrane scouring airflow control system configured to control an air diffusion amount which is supplied from an air diffusing apparatus disposed in a membrane separating apparatus to a separation membrane, the system comprising:
an operation data acquiring apparatus configured to acquire operation data measured during membrane filtration operation performed by the membrane separating apparatus;
an input data calculating apparatus configured to derive input data from the operation data received from the operation data acquiring apparatus;
a learning model generating apparatus configured to generate a learning model to infer a state of the separation membrane by using machine learning, an input to which is the input data received from the input data calculating apparatus;
a storage apparatus configured to store the learning model generated by the learning model generating apparatus;
an inference apparatus configured to infer a state of the separation membrane, based on the input data received from the input data calculating apparatus, by using the learning model stored in the storage apparatus;
an input data determining apparatus configured to determine the input data received from the input data calculating apparatus; and
an air diffusion amount controlling apparatus configured to execute first control of the air diffusing apparatus so that a first level of the air diffusion amount is determined in accordance with the state of the separation membrane inferred by the inference apparatus and air diffusion is performed at the first level, and configured to execute at the same time second control of the air diffusing apparatus so that a second level of the air diffusion amount is determined in accordance with the input data at a time when the input data determined by the input data determining apparatus becomes a first threshold or more or a second threshold or less and so that air diffusion is performed at the second level.

2. The membrane scouring airflow control system according to claim 1, wherein
the membrane filtration operation is an intermittent operation, in which a cycle including an operation period of executing the membrane filtration operation and a pause period following the operation period is repeated,
the first control is executed in each of the pause periods, and
the second control is executed in the operation period.

3. The membrane scouring airflow control system according to claim 1, wherein
the operation data includes a membrane filtration flow rate measured during the membrane filtration operation,
the input data derived from the membrane filtration flow rate by the input data calculating apparatus includes a change speed of the membrane filtration flow rate during the membrane filtration operation, and
the input data determining apparatus determines the change speed.

4. The membrane scouring airflow control system according to claim 3, wherein
in a case where the change speed, which is positive, becomes the first threshold or more, the air diffusion amount controlling apparatus determines the second level which is higher than the first level, and in a case where the change speed, which is negative, becomes the second threshold or less, the air diffusion amount controlling apparatus determines the second level which is lower than the first level.

5. The membrane scouring airflow control system according to claim 1, wherein
the learning model generating apparatus acquires data inputted to the learning model in a case where the inference apparatus has inferred the state of the separation membrane, and updates the learning model by machine learning, the input to which is the acquired data.

6. A membrane scouring airflow control method for controlling an air diffusion amount which is supplied from an air diffusing apparatus disposed in a membrane separating apparatus to a separation membrane, the method comprising:
a first step of acquiring operation data measured during membrane filtration operation performed by the membrane separating apparatus;
a second step of deriving input data from the operation data acquired in the first step;
a third step of generating a learning model to infer a state of the separation membrane by using machine learning, an input to which is the input data derived in the second step;
a fourth step of storing the learning model generated in the third step;
a fifth step of inferring the state of the separation membrane, based on the input data derived in the second step, by using the learning model stored in the fourth step;
a sixth step of determining the input data derived in the second step; and
a seventh step of executing first control of the air diffusing apparatus so that a first level of the air diffusion amount is determined in accordance with the state of the separation membrane inferred in the fifth step and so that air diffusion is performed at the first level, and executing, at the same time, second control of the air diffusing apparatus so that a second level of the air diffusion amount is determined in accordance with the input data at a time when the input data determined in the sixth step becomes a first threshold or more or a second threshold or less and so that air diffusion is performed at the second level.

7. A membrane scouring airflow control program executed by a computer of a membrane scouring airflow control system configured to control an air diffusion amount which is supplied from an air diffusing apparatus disposed in a membrane separating apparatus to a separation membrane, the program causing the computer to execute:
a first step of acquiring operation data measured during membrane filtration operation performed by the membrane separating apparatus;
a second step of deriving input data from the operation data acquired in the first step;
a third step of generating a learning model to infer a state of the separation membrane by using machine learning, an input to which is the input data derived in the second step;
a fourth step of storing the learning model generated in the third step;
a fifth step of inferring the state of the separation membrane, based on the input data derived in the second step, by using the learning model stored in the fourth step;
a sixth step of determining the input data derived in the second step; and
a seventh step of executing first control of the air diffusing apparatus so that a first level of the air diffusion amount is determined in accordance with the state of the separation membrane inferred in the fifth step and so that air diffusion is performed at the first level, and executing, at the same time, second control of the air diffusing apparatus so that a second level of the air diffusion amount is determined in accordance with the input data at a time when the input data determined in the sixth step becomes a first threshold or more or a second threshold or less and so that air diffusion is performed at the second level.
